(19) Europäisches Patentamt
European Patent Office
Office européen des brevets

(11) Veröffentlichungsnummer: **0 041 042**
B1

(12) # EUROPÄISCHE PATENTSCHRIFT

(45) Veröffentlichungstag der Patentschrift: **05.12.84**

(51) Int. Cl.³: **C 09 B 29/42** // D06P1/18

(21) Anmeldenummer: **81810174.3**

(22) Anmeldetag: **06.05.81**

(54) **Azoverbindungen.**

(30) Priorität: **12.05.80 CH 3701/80**

(43) Veröffentlichungstag der Anmeldung:
**02.12.81 Patentblatt 81/48**

(45) Bekanntmachung des Hinweises auf die Patenterteilung:
**05.12.84 Patentblatt 84/49**

(84) Benannte Vertragsstaaten:
**CH DE FR GB LI**

(56) Entgegenhaltungen:
**DE - A - 2 753 235**
**FR - A - 2 038 228**
**GB - A - 1 274 944**
**US - A - 4 140 684**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Koller, Stefan, Dr., Zelglistrasse, CH-4431 Ramlinsburg (CH)**
Erfinder: **Liechti, Hans Wilhelm, Dr., Brügglistrasse 7, CH-4104 Oberwil (CH)**

**EP 0 041 042 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Azoverbindungen der Benzol-azopyridon Reihe, Verfahren zu deren Herstellung sowie deren Verwendung als Farbstoffe zum Färben und Bedrucken von Textilmaterialien welche mit Dispersionsfarbstoffen anfärbbar sind.

Die neuen Azoverbindungen entsprechen der Formel I

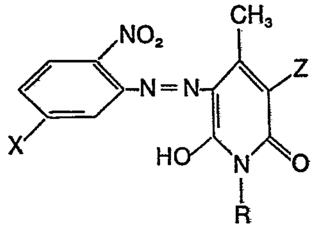

(I)

worin bedeuten:

X ein Halogenatom,

Z die CN- oder $SO_2$-Alkyl($C_1$–$C_4$)-Gruppe, und

R eine gegebenenfalls substituierte $C_1$–$C_8$ Alkylgruppe.

X in der Bedeutung eines Halogenatomes stellt das Fluor-, Chlor- oder Bromatom dar; vorzugsweise bedeutet X das Chloratom.

Z in der Bedeutung einer $SO_2$-Alkyl($C_1$–$C_4$)-Gruppe stellt beispielsweise die $SO_2CH_3$, $SO_2C_2H_5$, $SO_2C_3H_7$ (n- und iso-) sowie die $SO_2C_4H_9$ (n- und iso-) Gruppe dar. In bevorzugten Azoverbindungen der Formel I bedeutet Z die CN-Gruppe.

Handelt es sich bei R um eine unsubstituierte $C_1$–$C_8$-Alkylgruppe so kommen sowohl unverzweigte als auch verzweigte Alkylgruppen in Betracht; beispielsweise sind genannt die Methyl-, Äthyl-, n- und iso-Propyl-, n-, sec- und tert.-Butyl-, n- und iso-Pentyl-, n- und iso-Hexyl, n- und iso-Heptyl- sowie die n- und iso-Octylgruppe. Diese Alkylgruppen können substituiert sein; als Substituenten kommen beispielsweise in Frage: $C_1$–$C_4$-Alkoxygruppen wie die Methoxy-, Äthoxy-, n- und iso-Propoxy- und n- und iso-Butoxygruppe welche noch weiter substituiert sein können beispielsweise durch eine Phenylgruppe, eine $C_1$–$C_4$-Alkylphenylgruppe, eine $C_1$–$C_4$-Alkoxygruppe oder durch eine Phenoxygruppe. Als weitere Substituenten im Alkylrest R kommen in Frage die Phenylgruppe, die OH-Gruppe, die Phenoxygruppe, eine $C_1$–$C_4$-Alkylphenoxygruppe, eine Halogenphenoxygruppe, eine $C_1$–$C_4$-Alkoxyphenoxygruppe, eine –OCO-Alkyl-($C_1$–$C_4$)Gruppe, die –OCO-phenyl Gruppe, welche im Phenylrest noch durch Halogen weitersubstituiert sein kann und die –OCONHphenyl Gruppe. In bevorzugten Azoverbindungen der Formel I bedeutet R eine unsubstituierte, unverzweigte $C_1$–$C_4$-Alkylgruppe oder eine durch Phenyl, Phenoxy, Chlorophenoxy oder Phenoxyäthoxy substituierte $C_2$–$C_4$-Alkylgruppe insbesondere eine durch Phenoxy substituierte $C_2$–$C_4$-Alkylgruppe.

In einer bevorzugten Klasse der erfindungsgemässen Azoverbindungen der Formel I bedeuten X das Chlor- oder Bromatom, Z die CN oder $SO_2CH_3$-Gruppe und R eine unsubstituierte, unverzweigte oder verzweigte $C_1$–$C_8$-Alkylgruppe, eine Äthylgruppe die substituiert ist durch OH, Phenyl, $OCH_3$, gegebenenfalls durch $OCH_3$, Cl oder $CH_3$ substituiertes Phenoxy, $OCOCH_3$, gegebenenfalls durch Cl substituiertes Phenylcarbonyloxy, Phenylaminocarbonyloxy, oder eine Propylgruppe die substituiert ist durch $OCH_3$, iso-$OC_3H_7$, gegebenenfalls durch Äthyl substituiertes Phenylmethoxy, durch Phenoxyäthoxy oder durch Methoxyäthoxy.

Die neuen Azoverbindungen der Formel I können nach bekannter Art und Weise hergestellt werden beispielsweise derart, dass man ein Amin der Formel II

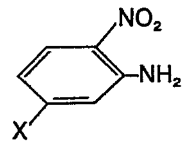

(II)

diazotiert und mit einer Kupplungskomponente der Formel III

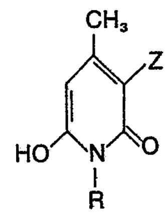

(III) ,

worin die Symbole X, Z und R die angegebene Bedeutung haben, kuppelt.

Die Diazotierungsreaktion und Kupplungsreaktion erfolgen auf bekannte Art, wie z.B. beschrieben in Ullmanns Encyklopädie der technischen Chemie, Bd. 5 (1954) Seite 783ff.

Die Amine der Formel II sind bekannt und können nach bekannten Methoden hergestellt werden. Man verwendet insbesondere solche Amine der Formel II worin X das Chlor- oder Bromatom bedeutet.

Als Amine sind beispielsweise genannt:
2-Nitro-5-chlor-anilin und 2-Nitro-5-brom-anilin.

Die Kupplungskomponenten der Formel III sind grösstenteils bekannt oder können nach bekannten Methoden gewonnen werden. Man verwendet insbesondere solche Kupplungskomponenten der Formel III, worin Z die CN-Gruppe bedeutet und R eine unsubstituierte unverzweigte $C_1$–$C_4$-Alkylgruppe oder eine vor allem durch Phenoxy substituierte $C_2$–$C_4$-Alkylgruppe, darstellt.

Um zu den bevorzugten Azoverbindungen zu gelangen geht man von Aminen der Formel II aus, worin X das Chlor- oder Bromatom bedeutet, diazotiert diese Amine und kuppelt sie auf eine Kupplungskomponente der Formel III, worin Z die CN- oder $SO_2CH_3$-Gruppe darstellt und R eine unsubstituierte, unverzweigte oder verzweigte $C_1$–$C_8$-Alkylgruppe, eine Äthylgruppe die substituiert ist durch OH, Phenyl, $OCH_3$, gegebenenfalls durch $OCH_3$, Cl oder $CH_3$ substituiertes Phenoxy, $OCOCH_3$, gegebenenfalls durch Cl substituiertes Phenylcarbonyloxy, Phenylaminocarbonyloxy oder eine Propylgruppe die substituiert ist durch $OCH_3$, iso-$OC_3H_7$, gegebenenfalls durch Äthyl sub-

stituiertes Phenylmethoxy, durch Phenoxyäthoxy oder durch Methoxyäthoxy, bedeutet.

Aus der grossen Vielzahl der Kupplungskomponenten der Formel III sind beispielsweise genannt:

1-β-Phenoxy-äthoxy-propyl-3-cyan-4-methyl-6-hydroxypyrid-(2)-on,
1-Methyl-3-cyan-4-methyl-6-hydroxypyrid-(2)-on,
1-Äthyl-3-cyan-4-methyl-6-hydroxypyrid-(2)-on,
1-n-Propyl-3-cyan-4-methyl-6-hydroxypyrid-(2)-on,
1-n-Butyl-3-cyan-4-methyl-6-hydroxypyrid-(2)-on,
1-n-Hexyl-3-cyan-4-methyl-6-hydroxypyrid-(2)-on,
1-iso-Octyl-3-cyan-4-methyl-6-hydroxypyrid-(2)-on,
1-β-Hydroxyäthyl-3-cyan-4-methyl-6-hydroxypyrid-(2)-on,
1-Phenyläthyl-3-cyan-4-methyl-6-hydroxypyrid-(2)-on,
1-Phenoxyäthyl-3-cyan-4-methyl-6-hydroxypyrid-(2)-on,
1-(3′-Methoxy)-phenoxyäthyl-3-cyan-4-methyl-6-hydroxypyrid-(2)-on,
1-(4′-Chlor)-phenoxyäthyl-3-cyan-4-methyl-6-hydroxypyrid-(2)-on,
1-(2′-Methyl)-phenoxyäthyl-3-cyan-4-methyl-6-hydroxypyrid-(2)-on,
1-Methoxyäthyl-3-cyan-4-methyl-6-hydroxypyrid-(2)-on,
1-Methoxypropyl-3-cyan-4-methyl-6-hydroxypyrid-(2)-on,
1-Isopropoxypropyl-3-cyan-4-methyl-6-hydroxypyrid-(2)-on,
1-Methoxyäthoxypropyl-3-cyan-4-methyl-6-hydroxy-pyrid-(2)-on,
1-Phenylmethoxypropyl-3-cyan-4-methyl-6-hydroxypyrid-(2)-on,
1-(4′-Äthyl)-phenylmethoxypropyl-3-cyan-4-methyl-6-hydroxypyrid-(2)-on,
1-Methylcarbonyloxyäthyl-3-cyan-4-methyl-6-hydroxypyrid-(2)-on,
1-Phenylcarbonyloxyäthyl-3-cyan-4-methyl-6-hydroxypyrid-(2)-on,
1-(4′-Chlor)-phenylcarbonyloxyäthyl-3-cyan-4-methyl-6-hydroxypyrid-(2)-on,
1-Phenylaminocarbonyloxyäthyl-3-cyan-4-methyl-6-hydroxypyrid-(2)-on,
1-n-Butyl-3-methylsulfonyl-4-methyl-6-hydroxypyrid-(2)-on
und
1-n-Hexyl-3-methylsulfonyl-4-methyl-6-hydroxypyrid-(2)-on.

Verwendung finden die erfindungsgemässen Azoverbindungen der Formel I vor allem als Farbstoffe zum Färben, Klotzen oder Bedrucken von Textilmaterialien welche mit Dispersionsfarbstoffen anfärbbar sind. Die Textilmaterialien vor allem synthetischen Fasermaterialien aus linearen, aromatischen Polyestern, beispielsweise solchen aus Terephthalsäure und Glykolen, besonders Äthylenglykol oder Kondensationsprodukten aus Terephthalsäure und 1,4-Bis-(hydroxymethyl)-hexahydrobenzol; aus Polycarbonaten, z.B. solchen aus α,α-Dimethyl-4,4′-dihydroxydiphenylmethan und Phosgen, aus Estern der Cellulose, beispielsweise Cellulosestriacetat oder auf Polyvinylchlorid-Basis, können dabei in den verschiedensten Verarbeitungsformen vorliegen wie z.B. als Fasern, Fäden oder Vliesen, Geweben oder insbesondere als Gewirke.

Die Farbstoffe werden dabei nach den bekannten Färbeverfahren appliziert, beispielsweise färbt man Polyestermaterialien im Ausziehverfahren aus wässeriger Dispersion in Gegenwart von üblichen anionischen oder nichtionischen Dispergiermitteln und gegebenenfalls üblichen Quellmitteln (Carrier) bei Temperaturen zwischen 80 und 125 °C oder in Abwesenheit von Carrier unter Druck bei etwa 100 bis 140 °C (HT-Verfahren). Cellulose-2½-acetat färbt man vorzugsweise zwischen ungefähr 65 bis 85 °C und Cellulosetriacetat bei Temperaturen bis zu 115 °C. Die Farbstoffe eignen sich ferner zum Färben nach dem Thermosol-Verfahren. Sie färben gleichzeitig im Färbebad anwesende Wolle und Baumwolle nicht oder nur wenig an, (sehr gute Reserve), so dass sie gut zum Färben von Polyester/Wolle- und Polyester/Cellulose-Mischgeweben verwendbar sind. Sie besitzen zudem gute Löslichkeit in vielen organischen Lösungsmitteln und können so zum Färben von Lacken, Ölen, Kunststoffen wie Polystyrol und Polyäthylen, in der Masse und von Fasern nach den üblichen Spinnfärbeprozessen dienen.

Es ist vorteilhaft die Farbstoffe vor ihrer Verwendung in Farbstoffpräparate überzuführen. Hierzu werden sie vermahlen, so dass ihre Teilchengrösse im Mittel zwischen 0,01 und 10 Mikron beträgt. Das Vermahlen kann in Gegenwart von Dispergiermitteln erfolgen. Beispielsweise wird der Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man, nach Zugabe von Wasser färben, klotzen oder bedrucken.

Beim Klotzen und Bedrucken wird man die üblichen Verdickungsmittel verwenden, z.B. modifizierte oder nicht-modifizierte natürliche Produkte, beispielsweise Alginate, Britishgummi, Gummi arabicum, Kristallgummi, Johannisbrotkernmehl, Tragant, Carboxymethylcellulose, Hydroxyäthylcellulose, Stärke oder synthetische Produkte beispielsweise Polyacrylamide oder Polyvinylalkohole.

Die neuen Azofarbstoffe der Formel I verleihen den genannten hydrophoben Materialien klare, leuchtende, grünstichig gelbe Nuancen von sehr guten Echtheiten, wie vor allem sehr guter Lichtechtheit und Sublimierechtheit, Thermofixier-, Plissier-, Chlor- und Nassechtheit wie Wasser-, Schweiss- und Waschechtheit; die Ausfärbungen sind ferner gekennzeichnet durch eine gute ph-Stabilität, und zeigen kein «catalytic fading» sofern sie mit blauen Farbstoffen vermischt, appliziert werden.

Die folgenden Beispiele veranschaulichen die Erfindung ohne sie darauf zu limitieren; Temperaturen sind in Grad Celsius angegeben; Teile (T)

bedeuten, sofern nichts anderes angegeben ist, Gewichtsteile.

Beispiel 1

17,25 g 2-Nitro-5-chloranilin werden in 120 ml 2 n Salzsäure angeschlämmt. Die Suspension wird unter gutem Rühren bei 0 bis 5° mit 25 ml 4 n Nitritlösung versetzt, entsprechend einer Menge von 6,9 g festem Natriumnitrit. Man rührt während 30 Minuten bei dieser Temperatur und erhält eine klare, leicht gelbliche Diazolösung.

In einem Becherglas werden 33 g 1-β-Phenoxyäthoxypropyl-3-cyan-4-methyl-6-hydroxypyrid-2-on in 700 ml Wasser angeschlämmt und solange mit 1 n Natronlauge versetzt, bis alles gelöst ist. Man gibt noch 25 g kristallines Natriumacetat zu und tropft zu dieser Lösung des Pyridons bei 0 bis 10° die oben hergestellte Diazolösung, wobei der pH-Wert durch Zugabe von Natronlauge zwischen 7 und 8 gehalten wird. Der neue Farbstoff der Formel

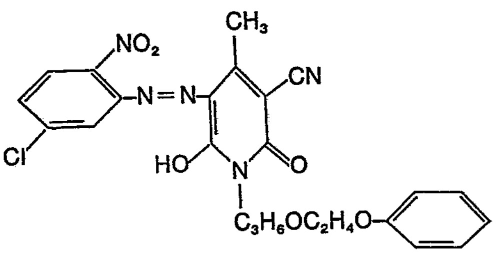

bildet sich momentan. Er wird filtriert, mit Wasser gewaschen und im Vakuum bei 60 bis 70° getrocknet. Man erhält 45 g eines gelben Pulvers, das Polyesterfasern und andere hydrophobe Textilien in farbstarken sehr grünstichig-gelben Tönen mit sehr guter Licht- und Sublimierechtheit anfärbt.

Das als Kupplungskomponente verwendete 1-β-Phenoxyäthoxypropyl-3-cyan-4-methyl-pyrid-2-on wird hergestellt, indem man β-Phenoxyäthoxypropylamin in bekannter Weise mit Cyanessigsäure umsetzt und das gebildete Amid mit Acetessigsäure und wässriger Ammoniaklösung als Base zum Pyridon ringschliesst.

Farbstoffe mit ebensoguten Echtheiten stellen die Verbindungen dar, die der folgenden allgemeinen Formel entsprechen und die auf analoge Weise wie beschrieben, hergestellt werden.

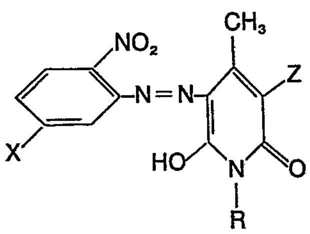

Sie färben hydrophobe Fasern alle in leuchtend grünstichig-gelben Tönen an.

| Beispiel | X | Z | R |
|---|---|---|---|
| 2 | Cl | CN | $-CH_3$ |
| 3 | Cl | CN | $-C_2H_5$ |
| 4 | Cl | CN | $n-C_3H_7$ |
| 5 | Cl | CN | $n-C_4H_9$ |
| 6 | Cl | CN | $n-C_6H_{13}$ |
| 7 | Cl | CN | 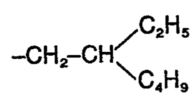 |
| 8 | Cl | CN | $-C_2H_4OH$ |
| 9 | Cl | CN | $-C_2H_4-$ 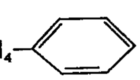 |
| 10 | Cl | CN | $-C_2H_4O-$ 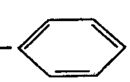 |
| 11 | Cl | CN | $-C_2H_4O-$ 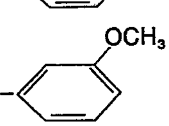 |
| 12 | Cl | CN | $-C_2H_4O-$ 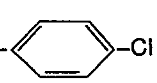 |
| 13 | Cl | CN | $-C_2H_4O-$ 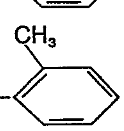 |
| 14 | Cl | CN | $-C_2H_4OCH_3$ |

| Beispiel | X | Z | R |
|---|---|---|---|
| 15 | Cl | CN | $-C_3H_6OCH_3$ |
| 16 | Cl | CN | $-C_3H_6OCH(CH_3)_2$ |
| 17 | Cl | CN | $-C_3H_6OC_2H_4OCH_3$ |
| 18 | Cl | CN | 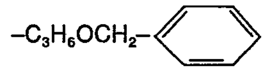 |
| 19 | Cl | CN | 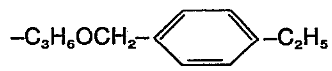 |
| 20 | Cl | CN | 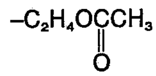 |
| 21 | Cl | CN | 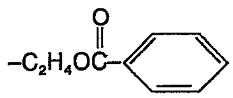 |
| 22 | Cl | CN | 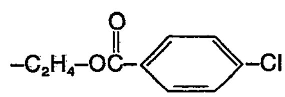 |
| 23 | Cl | CN | 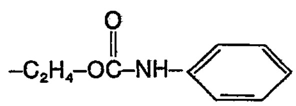 |
| 24 | Br | CN | $-C_2H_5$ |
| 25 | Br | CN | $n-C_4H_9$ |
| 26 | Br | CN | $-C_3H_6OCH_3$ |
| 27 | Br | CN | 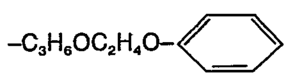 |
| 28 | Cl | $SO_2CH_3$ | $n-C_4H_9$ |
| 29 | Cl | $SO_2CH_3$ | $n-C_6H_{13}$ |
| 30 | Br | $SO_2CH_3$ | $n-C_4H_9$ |

Beispiel 31

1 T des gemäss Beispiel 1 erhaltenen Farbstoffes wird mit 2 T einer 50%igen wässrigen Lösung des Natriumsalzes der Dinaphthylmethandisulfonsäure nass vermahlen und getrocknet.

Dieses Farbstoffpräparat wird mit 40 T einer 10%igen wässrigen Lösung des Natriumsalzes der N-Benzylheptadecyl-benzimidazoldisulfonsäure verrührt und 4 T einer 40%igen Essigsäurelösung zugegeben. Durch Verdünnen mit Wasser wird daraus ein Färbebad von 4000 Teilen bereitet.

In dieses Bad geht man bei 50° mit 100 T eines Polyesterfaserstoffes ein, steigert die Temperatur innert einer halben Stunde auf 120 bis 130° und färbt eine Stunde in geschlossenem Gefäss bei dieser Temperatur. Anschliessend wird gut gespült. Man erhält eine kräftige grünstichig gelbe Färbung von vorzüglicher Licht- und Sublimierechtheit.

Beispiel 32

2 T des gemäss Beispiel 1 erhaltenen Farbstoffes werden in 4000 T Wasser dispergiert. Zu dieser Dispersion gibt man 12 T des Natriumsalzes von o-Phenylphenol sowie 12 T Diammoniumphosphat und färbt 100 T Garn aus Polyäthylenglykolterephthalat 90 Minuten lang bei 95 bis 98° in dieser Flotte.

Das gefärbte Material wird anschliessend gespült und mit wässriger Natronlauge und einem Dispergator nachbehandelt. Man erhält so eine licht- und sublimierechte grünstichige gelbe Färbung.

Beispiel 33

Polyäthylenglykolterephthalatgewebe wird auf einem Foulard bei 40° mit einer Flotte folgender Zusammensetzung imprägniert:

20 T des gemäss Beispiel 1 erhaltenen Farbstoffes fein dispergiert in
10 T Natriumalginat
20 T Triäthanolamin
20 T Octylphenolpolyglykoläther und
930 T Wasser.

Das auf ca. 100% abgequetschte Gewebe wird bei 100° getrocknet und anschliessend während 30 Sekunden bei einer Temperatur von 210° fixiert.

Die gefärbte Ware wird mit Wasser gespült, geseift und getrocknet. Man erhält eine licht- und sublimierechte grünstichig gelbe Färbung.

**Patentansprüche**

1. Azoverbindungen der Formel I

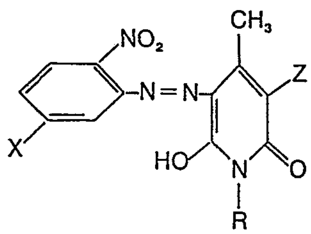

(I)

worin bedeuten:

X ein Halogenatom,

Z die CN- oder $SO_2$-Alkyl($C_1$–$C_4$)-Gruppe, und

R eine gegebenenfalls substituierte $C_1$–$C_8$-Alkylgruppe.

2. Azoverbindungen gemäss Anspruch 1, dadurch gekennzeichnet, dass X das Chlor- oder Bromatom bedeutet, Z die CN- oder $SO_2CH_3$-Gruppe und R eine unsubstituierte, unverzweigte oder verzweigte $C_1$–$C_8$-Alkylgruppe, eine Äthylgruppe, die substituiert ist durch OH, Phenyl, $OCH_3$, gegebenenfalls durch $OCH_3$, Cl oder $CH_3$ substituiertes Phenoxy, OCO–$CH_3$, gegebenenfalls durch Cl substituiertes Phenylcarbonyloxy, Phenylaminocarbonyloxy, oder eine Propylgruppe, die substituiert ist durch $OCH_3$, iso-$OC_3H_7$, gegebenenfalls durch Äthyl substituiertes Phenylmethoxy, durch Phenoxyäthoxy oder durch Methoxyäthoxy.

3. Azoverbindungen gemäss Anspruch 1, dadurch gekennzeichnet, dass X das Chloratom bedeutet.

4. Azoverbindungen gemäss Anspruch 1, dadurch gekennzeichnet, dass Z die CN-Gruppe bedeutet.

5. Azoverbindungen gemäss Anspruch 1, dadurch gekennzeichnet, dass R eine unsubstituierte unverzweigte $C_1$–$C_4$-Alkylgruppe bedeutet.

6. Azoverbindungen gemäss Anspruch 1, dadurch gekennzeichnet, dass R eine durch Phenyl, Phenoxy, Chlorophenoxy oder Phenoxyäthoxy substituierte $C_2$–$C_4$-Alkylgruppe bedeutet.

7. Azoverbindungen gemäss Anspruch 6, dadurch gekennzeichnet, dass R eine durch Phenoxy substituierte $C_2$–$C_4$-Alkylgruppe bedeutet.

8. Verfahren zur Herstellung der Azoverbindungen der Formel I gemäss Anspruch 1, dadurch gekennzeichnet, dass man ein Amin der Formel II

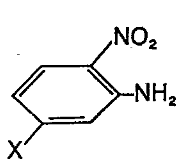

(II)

diazotiert und mit einer Kupplungskomponente der Formel III

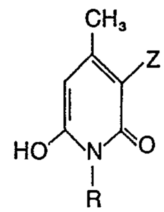

(III) ,

worin die Symbole X, Z und R die angegebene Bedeutung haben, kuppelt.

9. Verwendung der Azoverbindungen der Formel I gemäss Anspruch 1 oder der gemäss dem Verfahren des Anspruchs 8 erhaltenen Azoverbindungen als Farbstoffe zum Färben und Bedrucken von Textilmaterialien, welche mit Dispersionsfarbstoffen anfärbbar sind.

10. Verwendung gemäss Anspruch 9 zum Färben und Bedrucken von Polyestermaterialien.

11. Das mit den Azoverbindungen der Formel I behandelte Textilmaterial.

**Claims**

1. An azo compound of the formula I

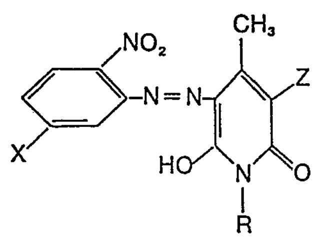

(I)

wherein

X is a halogen atom,

Z is the CN or $SO_2$-alkyl($C_1$–$C_4$) group, and

R is an unsubstituted or substituted $C_1$–$C_8$-alkyl group.

2. An azo compound according to Claim 1, wherein X is the chlorine or bromine atom; Z is the CN or $SO_2CH_3$ group; and R is an unsubstituted, straight-chain or branched-chain $C_1$–$C_8$-alkyl group, an ethyl group which is substituted by OH, phenyl or $OCH_3$; or R is phenoxy which is unsubstituted or substituted by $OCH_3$, Cl or $CH_3$; or it is OCO–$CH_3$; or phenylcarbonyloxy or phenylaminocarbonyloxy each unsubstituted or substituted by Cl; or R is a propyl group which is substituted by $OCH_3$, by iso-$OC_3H_7$, or by phenylmethoxy unsubstituted or substituted by ethyl, or R is a propyl group substituted by phenoxyethoxy or by methoxyethoxy.

3. An azo compound according to Claim 1, wherein X is the chlorine atom.

4. An azo compound according to Claim 1, wherein Z is the CN group.

5. An azo compound according to Claim 1, wherein R is an unsubstituted, straight-chain $C_1$–$C_4$-alkyl group.

6. An azo compound according to Claim 1, wherein R is a $C_2$–$C_4$-alkyl group which is substituted by phenyl, phenoxy, chlorophenoxy or phenoxyethoxy.

7. An azo compound according to Claim 6, wherein R is a $C_2$–$C_4$-alkyl group substituted by phenoxy.

8. A process for producing an azo compound of the formula I according to Claim 1, which process comprises diazotising an amine of the formula II

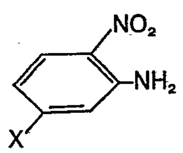 (II) ,

and coupling the diazotised product with a coupling component of the formula III

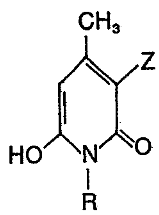 (III)

wherein the symbols X, Z and R have the given meanings.

9. Use of an azo compound of the formula I according to Claim 1, or of an azo compound obtained by the process of Claim 8, as a dye for dyeing and printing textile materials which can be dyed with disperse dyes.

10. Use according to Claim 9 for dyeing and printing polyester materials.

11. The textile material treated with an azo compound of the formula I according to Claim 1.

**Revendications**

1. Composés azoïques ayant la formule I

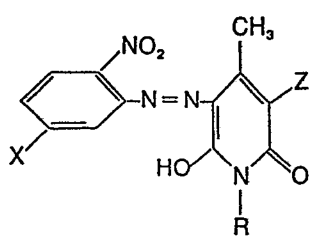 (I)

dans laquelle:

X est un atome d'halogène

Z est le groupe CN- ou le groupe $SO_2$-alkyle($C_1$–$C_4$), et

R est un groupe $C_1$–$C_8$-alkyle éventuellement substitué.

2. Composés azoïques selon la revendication 1, caractérisés par le fait que X est l'atome de chlore ou l'atome de brome; Z est le groupe CN ou $SO_2CH_3$, et R est un groupe $C_1$–$C_8$-alkyle non substitué, non ramifié ou ramifié, un groupe éthyle qui est substitué par un radical OH, phényle, $OCH_3$, phénoxy éventuellement substitué par un reste $OCH_3$, Cl ou $CH_3$, un radical OCO–$CH_3$, un radical phénylcarbonyloxy, phénylaminocarbonyloxy, éventuellement substitués par Cl, ou bien un groupe propyle qui est substitué par $OCH_3$, iso-$OC_3H_7$, un radical phénylméthoxy éventuellement substitué par un reste éthyle, par un radical phénoxyéthoxy ou par un radical méthoxyéthoxy.

3. Composés azoïques selon la revendication 1, caractérisés par le fait que X désigne l'atome de chlore.

4. Composés azoïques selon la revendication 1, caractérisés par le fait que Z désigne le groupe CN.

5. Composés azoïques selon la revendication 1, caractérisés par le fait que R désigne un groupe $C_1$–$C_4$-alkyle non substitué et non ramifié.

6. Composés azoïques selon la revendication 1, caractérisés par le fait que R désigne un groupe $C_2$–$C_4$-alkyle substitué par un radical phényle, phénoxy, chlorophénoxy ou phénoxyéthoxy.

7. Composés azoïques selon la revendication 6, caractérisés par le fait que R désigne un groupe $C_2$–$C_4$-alkyle substitué par un radical phénoxy.

8. Procédé pour la préparation des composés azoïques de formule I selon la revendication 1, caractérisé par le fait qu'on diazote une amine de formule II:

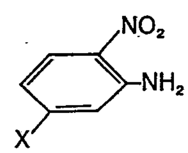 (II)

et qu'on copule sur un copulant de formule III:

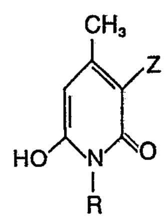 (III) ,

dans lesquelles les symboles X, Z et R ont les significations mentionnées.

9. Utilisation des composés azoïques de formule I selon la revendication 1 ou des composés azoïques obtenus selon le procédé de la revendication 8, comme colorants pour teindre et imprimer des matières textiles qui sont teignables avec des colorants dispersés.

10. Utilisation selon la revendication 9, pour teindre et imprimer des matières en polyester.

11. La matière textile traitée avec les composés azoïques de formule I.